# DEMANDE DE BREVET EUROPEEN

(11) **EP 0 937 413 A1**
(43) Date de publication de la demande: **25.08.1999**
(21) Numéro de dépôt: 99460013.8
(22) Date de dépôt: 12.02.1999
(51) Int. Cl.: A23L 3/36, A23G 9/28, A23B 7/04

(54) **Installation pour le formage d'articles alimentaires à partir d'un produit alimentaire en masse refroidi**

(30) Priorité: 18.02.1998 FR 9802159
(71) Demandeur: CIMS, 72302 Sable-Sur-Sarthe (FR)
(72) Inventeur: Guyomard, Philippe, 60000 Beauvais (FR)
(74) Mandataire: Vidon, Patrice

(57) **Abrégé**

L'invention concerne une installation pour le formage d'articles alimentaires refroidis à partir d'un produit alimentaire en masse refroidi caractérisée en ce qu'elle comprend :
- au moins un dispositif de refroidissement en continu (1) d'un produit alimentaire en masse (2) ;
- au moins un dispositif de découpe (4) en continu d'articles (7) à partir dudit produit alimentaire en masse refroidi provenant dudit dispositif de refroidissement (1) ;
- au moins un tapis de convoyage (5) acheminant le produit alimentaire en masse (2) et lesdits articles dans ledit dispositif de refroidissement (1) et ledit dispositif de découpe (4).

## Description

L'invention concerne le domaine de la réalisation des produits alimentaires refroidis. Elle trouve notamment son application dans les chaînes de traitement utilisées pour surgeler et/ou congeler des produits alimentaires.

Plus précisément, l'invention se rapporte à une installation destinée à être utilisée pour réaliser des articles de produit alimentaire refroidis à partir d'un produit alimentaire en masse.

Un certain nombre d'articles alimentaires surgelés et/ou congelés sont réalisés à partir d'un produit alimentaire en masse. A titre d'exemple on peut citer notamment les purées de légumes, pâtes patissières, etc...

Dans les chaînes de fabrication de tels articles alimentaires connues de l'état de la technique, le produit alimentaire en masse est divisé en lots individuels et chaque lot est ensuite refroidi. De telles techniques présentent de nombreux inconvénients.

En premier lieu, les installations correspondantes sont d'une maintenance peu aisée car les articles avant surgélation et/ou congélation présentent fréquemment une texture impliquant facilement des souillures de la chaîne de fabrication.

En second lieu, ces techniques limitent la teneur en eau maximale des produits à traiter.

Enfin, on notera également que de telles techniques n'autorisent pas un traitement continu du produit en masse et entraînent donc une productivité relativement faible.

L'objectif principal de la présente invention est de proposer une installation pour la réalisation d'articles alimentaires à partir d'un produit alimentaire en masse ne montrant pas les inconvénients des installations de l'état de la technique.

Notamment un objectif de la présente invention est de proposer une telle installation qui permette un traitement en continu du produit en masse et autorise donc des cadences élevées de fabrication susceptibles d'entraîner un gain de productivité global d'une chaîne de fabrication dans laquelle elle sera installée.

Egalement, un objectif de la présente invention est de décrire une telle installation qui soit d'une maintenance plus facile.

Encore un autre objectif de la présente invention est de présenter une telle installation qui permette de traiter des produits présentant une forte teneur en eau.

Ces objectifs, ainsi que d'autres qui apparaîtront par la suite sont atteints grâce à l'invention qui concerne une installation pour le formage d'articles alimentaires refroidis à partir d'un produit alimentaire en masse refroidi caractérisée en ce qu'elle comprend :
- au moins un dispositif de refroidissement en continu d'un produit alimentaire en masse;
- au moins un dispositif de découpe en continu d'articles à partir dudit produit alimentaire en masse refroidi provenant dudit dispositif de refroidissement ;
- au moins un tapis de convoyage acheminant le produit alimentaire en masse et lesdits articles dans ledit dispositif de refroidissement et ledit dispositif de découpe.

L'invention propose donc, d'une façon originale par rapport à l'état de la technique, de refroidir le produit alimentaire en masse avant de le découper en articles et non pas de le découper en articles puis de le refroidir. On comprendra que la température de refroidissement du produit pourra être choisie en fonction de la nature et de la consistance de celui-ci. D'une manière générale cette température sera choisie pour donner une consistance suffisante au produit en masse afin d'autoriser ultérieurement sa découpe par le dispositif de découpe en continu. Généralement, une telle température sera légèrement négative.

Selon une variante préférentielle de l'invention, l'installation comprend au moins un dispositif de conformation dudit produit alimentaire, prévu entre ledit dispositif de refroidissement et ledit dispositif de découpe, ledit dispositif de conformation incluant au moins un outil conçu pour conférer un profil donné à la surface supérieure dudit produit alimentaire en masse refroidi.

Selon une telle caractéristique, il est possible de pourvoir la surface supérieure du produit en masse provenant du dispositif de refroidissement avec un profil donné. Une telle caractéristique sera avantageusement mise en oeuvre par exemple pour conformer la surface supérieure de produits alimentaires telle que de la purée ou des plats cuisinés divers de façon à conférer à cette surface un relief susceptible de rendre le produit plus attirant pour le consommateur.

L'outil mentionné ci-dessus servant à conférer un profil donné à la surface supérieure du produit alimentaire en masse refroidi par le dispositif de refroidissement de l'installation selon l'invention pourra se présenter sous différentes formes. Toutefois, selon une variante préférentielle particulièrement intéressante de l'invention, cet outil inclut au moins un tambour rotatif profilé. Un tel tambour rotatif profilé sera monté transversalement à l'axe de défilement du tapis de convoyage. Selon le profil que l'on souhaitera donner à la surface supérieure du produit alimentaire en masse, ce tambour rotatif présentera une surface extérieure variable. Il pourra notamment présenter des stries longitudinales ou transversales.

En ce qui concerne le dispositif de découpe du produit alimentaire en masse refroidi, celui-ci pourra également se présenter sous différentes formes. Dans un mode de réalisation de l'invention, ce dispositif de découpe comprendra un jeu de lames. Ce jeu de lames pourra être notamment prévu au dessus du tapis de convoyage et être périodiquement descendu en direction de celui-ci pour sectionner le produit alimentaire en masse refroidi en articles.

Selon un autre mode de réalisation, le dispositif de découpe pourra également inclure au moins un tambour rotatif pourvu d'un motif de découpe faisant saillie de sa surface extérieure, le motif de découpe présentant alors une épaisseur correspondant sensiblement à l'épaisseur du produit alimentaire en masse arrivant sur le tapis de convoyage.

Outre le dispositif de refroidissement, éventuellement le dispositif de conformation, et le dispositif de découpe en continu, l'installation selon la présente invention peut également avantageusement présenter des moyens d'individualisation des articles découpés par le dispositif de découpe.

Ces moyens d'individualisation pourront être mis en oeuvre selon différents concepts. Selon une variante, le dispositif d'individualisation comprendra des moyens de séparation des articles par gravité.

Selon une variante particulièrement intéressante, lorsque l'installation comprendra des tambours rotatifs tels que décrits ci-dessus, ceux-ci seront avantageusement prévus amovibles. De cette façon, il sera possible d'adapter la conformation et/ou la découpe du produit alimentaire en masse en fonction des besoins.

On notera également que l'installation selon l'invention pourra aussi inclure des moyens de refroidissement de la surface supérieure desdits articles. De tels moyens pourront par exemple comprendre des moyens de ventilation d'air réfrigéré.

L'invention, ainsi que les différents avantages qu'elle présente, seront plus facilement compris grâce à la description qui va suivre de deux modes de réalisation de celle-ci en référence aux figures dans lesquelles :
- la figure 1 représente schématiquement une vue de côté d'un premier mode de réalisation d'une installation selon l'invention ;
- la figure 2 représente schématiquement une vue de côté d'un second mode de réalisation de la présente invention.

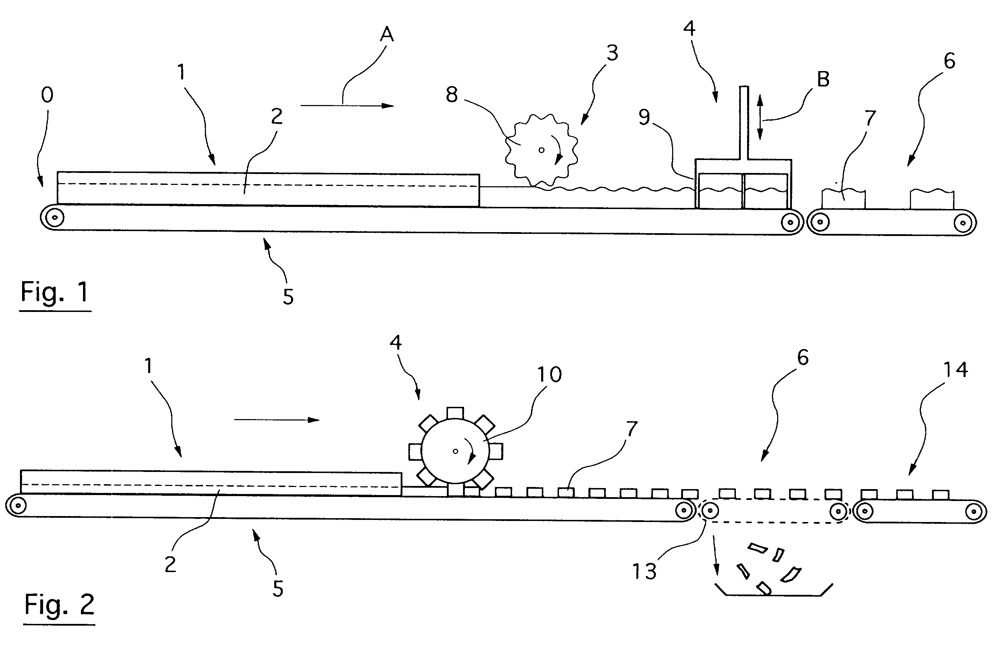

En référence à la figure 1, l'installation représentée comprend un dispositif de refroidissement 1 d'un produit en masse 2, un dispositif de conformation 3 permettant de conférer à la surface extérieure du produit en masse un profil en forme de vague, un dispositif de découpe 4 du produit en masse refroidi conformé, un premier tapis de convoyage 5 et un dispositif d'individualisation des articles refroidis conformés 6.

Plus précisément, le dispositif de refroidissement 1 est constitué par un tunnel de refroidissement monté sur le tapis de convoyage 5 et intégrant un circuit de refroidissement (non représenté) permettant de refroidir un produit alimentaire en masse, par exemple de la purée, jusqu'à une température légèrement négative de façon à lui conférer une consistance adéquate pour un traitement ultérieur. Le produit alimentaire en masse est alimenté à l'extrémité 0 de l'installation, le tapis de convoyage 5 acheminant les produits dans le sens indiqué par la flèche A. La longueur du tunnel de refroidissement est conçue pour refroidir de façon suffisante le produit alimentaire en masse 2 pour autoriser une découpe ultérieure nette par le dispositif de découpe.

A sa sortie du tunnel de refroidissement, ce produit alimentaire en masse est conformé grâce au dispositif de conformation 3 qui, dans le présent exemple de réalisation, inclut un tambour rotatif 8 dont la surface extérieure présente des stries longitudinales. La rotation de ce tambour rotatif 8 permet de modifier en continu la surface du produit alimentaire en masse sortant du tunnel de refroidissement et de conférer à cette surface un profil en forme de vagues.

Après conformation, le produit alimentaire en masse refroidi conformé arrive au niveau du dispositif de découpe 4. Ce dispositif de découpe 4 est constitué dans le présent mode de réalisation d'un jeu de lames 9 monté mobile grâce à des moyens mécaniques qui permettent à ce jeu de lames 9 de monter et de descendre de façon séquencée perpendiculairement à l'axe de défilement du tapis de convoyage 5 selon la double flèche indiquée en B.

Grâce à ce jeu de lames, le produit alimentaire en masse refroidi conformé est divisé en une pluralité d'articles alimentaires 7.

Les articles alimentaires 7 sont ensuite individualisés les uns des autres grâce à un tapis de convoyage qui présente un vitesse de défilement supérieure à celle du tapis de convoyage 5.

En référence à la figure 2, qui représente un deuxième mode de réalisation de l'installation selon la présente invention, l'installation représentée comprend un dispositif de refroidissement 1 d'un produit alimentaire en masse 2. Ce dispositif de refroidissement est réalisé sous la même forme que dans le premier mode de réalisation décrit ci-dessus. L'installation représentée comprend par ailleurs un dispositif de découpe 4 du produit alimentaire en masse à sa sortie du tunnel de refroidissement, ce dispositif comprenant un tambour rotatif 10 à motifs circulaires. Grâce à la rotation de ce tambour rotatif, une pluralité d'articles 7 présentant une section circulaire est découpée dans le produit en masse refroidi.

L'installation comprend par ailleurs un dispositif d'individualisation 6 par gravité des articles 7 découpés grâce au tambour rotatif 10. Ce dispositif d'individualisation comprend un premier tapis de convoyage perforé 13, au travers duquel les pertes de produits entre les articles 7 de section circulaire passent pour se retrouver dans un bac 15. Les articles individualisés sont ensuite récupérés sur un second tapis de convoyage 14.

Les modes de réalisation de l'invention ici décrits n'ont pas pour objet de réduire la portée de celle-ci. Il pourra donc y être apporté de nombreuses modifications sans sortir de son cadre. En particulier, on notera que les moyens de conformation de la surface extérieure du produit alimentaire ainsi que les moyens de découpe pourront se présenter sous d'autre formes que celles représentées.

## Revendications

1. Installation pour le formage d'articles alimentaires refroidis à partir d'un produit alimentaire en masse refroidi caractérisée en ce qu'elle comprend :
- au moins un dispositif de refroidissement en continu (1) d'un produit alimentaire en masse (2) incluant un tunnel de refroidissement ;
- au moins un dispositif de découpe (4) en continu d'articles (7) à partir dudit produit alimentaire en masse refroidi provenant dudit dispositif de refroidissement (1) ;
- au moins un tapis de convoyage (5) acheminant le produit alimentaire en masse (2) et lesdits articles dans ledit dispositif de refroidissement (1) et ledit dispositif de découpe (4).

2. Installation selon la revendication 1 caractérisée en ce qu'elle comprend au moins un dispositif de conformation (3) dudit produit alimentaire, prévu entre ledit dispositif de refroidissement (1) et ledit dispositif de découpe (4), ledit dispositif de conformation (4) incluant au moins un outil conçu pour conférer un profil donné à la surface supérieure dudit produit alimentaire en masse refroidi.

3. Installation selon la revendication 2 caractérisée en ce que ledit outil conçu pour conférer un profil donné à la surface supérieure dudit produit alimentaire en masse refroidi inclut au moins un tambour rotatif profilé (8) .

4. Installation selon l'une quelconque des revendications 1 à 3 caractérisée en ce que ledit dispositif de découpe (4) comprend un jeu de lames (9).

5. Installation selon l'une quelconque des revendications 1 à 3 caractérisée en ce que ledit dispositf de découpe (4) inclut au moins un tambour rotatif (10) présentant un motif de découpe.

6. Installation selon l'une quelconque des revendications 1 à 5 caractérisée en ce qu'elle comprend de plus au moins un dispositif d'individualisation (6) des articles (7) découpés grâce audit dispositif de découpe (4).

7. Installation selon la revendication 6 caractérisée en ce que ledit dispositif d'individualisation (6) comprend des moyens de séparation desdits articles par gravité.

8. Installation selon l'une quelconque des revendications 3 ou 5 caractérisée en ce que le ou lesdits tambours rotatifs (8,10) sont amovibles.

9. Installation selon l'une quelconque des revendications 1 à 8 caractérisée en ce qu'elle comprend des moyens de refroidissement de la surface supérieure desdits articles.
